# EUROPEAN PATENT APPLICATION

(11) **EP 4 745 823 A1**
(43) Date of publication of application: **20.05.2026**
(21) Application number: 24275130.3
(22) Date of filing: 18.11.2024
(51) Int. Cl.: G06F 30/15, G05D 1/00, G06F 30/27, G05B 17/00, G06F 111/10, G06N 3/04

(54) **METHODS AND SYSTEMS FOR CREATING DIGITAL TWINS OF MOBILE ASSETS**

(71) Applicant: Helsing GmbH, 81671 Munich (DE)
(72) Inventor: SCHMAUSER, Dominik, 81671 Munich (DE); BAKER, James, 81761 Munich (DE); FAITH, Joe, 81761 Munich (DE); SHAH, Jolyon, 81761 Munich (DE)
(74) Representative: Haseltine Lake Kempner LLP

(57) **Abstract**

A computer-implemented method is provided for creating a digital twin model of a mobile asset. The digital twin model comprises a model of movement behaviour of the mobile asset in different use conditions. The method comprises retrieving movement data of the mobile asset, the movement data comprising controller data and corresponding sensor data of the mobile asset measured during movement of the mobile asset. The method further comprises training the digital twin model using the movement data.

## Description

### Field of the Invention

The present invention relates to creating digital twins for mobile assets, and particularly to creating digital twins for autonomous mobile assets.

### Background of the Invention

Digital models of vehicles are used in for a number of different applications. For instance, they can be used to model a vehicle throughout its usage lifetime to assist in determining when maintenance or repair will be needed. Alternatively, they can be used to assist in modelling to design new and updated vehicles or parts thereof. For autonomous vehicles, they can be used to train the vehicle controller.

In particular, operating an autonomous vehicle involves the use of a vehicle controller that takes the place of the human controller in controlling the motion of the vehicle. For instance, for an Uncrewed Aerial Vehicle (UAV) a flight controller is required to take the place of the human controller pilot. Vehicle controllers take information from sensors (e.g. for flight controllers, information such as airspeed indicators, attitude sensors, cameras, and altimeters etc.) and then implement dynamically determined changes to control outputs (e.g. for aircraft: throttle, rudder, elevators, and ailerons etc.) to achieve the desired movement goals of the vehicle, such as maintaining a course, turning, or closing on a target. For a vehicle controller to operate successfully it must be able to reliably translate desired changes in the vehicle's motion into precise changes to the controls. Accordingly, developing a vehicle controller requires precise knowledge of the dynamics of the specific vehicle you are concerned with and ideally how it responds to controls across a range of different conditions (e.g. such as changing airspeed and attitude for aircraft).

However, there are a number of problems associated with developing vehicle controllers. Taking the specific example of aircraft - but noting the same approaches and problems apply across all vehicles and associated vehicle controllers - conventional flight controllers may be tuned to the dynamics of an aircraft through extensive flight testing, and by gradually adjusting the parameters of the flight controller so it can control the aircraft precisely. However, this is inefficient, time intensive and expensive, requiring multiple test flights and many iterations of the flight controller.

Accordingly, the development of flight controllers often instead relies on the use of an off-the-shelf Flight Dynamics Model (FDM). For example, you may access an FDM from the open-source software library JSBSim, which is a software library that models the flight dynamics of an aerospace vehicle. FDMs are mathematical physics models that define the movement of an aircraft or rocket etc. under the forces and moments applied to it using the various control mechanisms and from the forces of nature. Hence FDMs are essentially a digital model, also referred to as a digital twin, of the aircraft of concern. FDMs are conventionally configured by modelling the dynamics of a generic aircraft, and then tuning them to the characteristics of specific individual aircraft of concern, such as through the use of coefficients that capture for instance the mass of the aircraft, the amount of yaw force created by a certain rudder input, the increase in thrust in response to throttle changes, or the effects of ailerons on lift etc. Determining these values will typically be performed through a combination of theoretically modelling the aerodynamic properties of the aircraft, for instance using by continuous fluid dynamics (CFD), and experimentally verifying those results through a series of wind tunnel tests. Once calibrated, FDMs can then be used to train flight controllers by providing simulation environments in which the controller can be tested, and subsequently optimised. Hence these FDMs provide a model which simulates the responses of an aircraft to control inputs. The flight controller can then use these to determine the appropriate controller outputs required to achieve its goals. The same conceptual framework and conventional approach applies to vehicle controllers for other types of vehicle.

However, these conventional methods for arriving at digital models of vehicles, for instance vehicle dynamics models such as FDMs, and for the subsequent training of vehicle controllers such as flight controllers, suffer from a number of disadvantages. In particular, they are typically inefficient to arrive at, and/or insufficiently accurate in modeling or simulating the vehicle type concerned, let alone the specific vehicle you are wishing to control.

For instance, the conventional methods of developing digital models of vehicles such as vehicle dynamics models suffer from at least the following problems. First, as outlined above, they are difficult and time consuming to create, for instance for aircraft where theoretical modelling and experimental wind tunnel usage is required. Second, they often fail to capture the dynamics of the vehicle at the edge of its performance envelope, for instance for aircraft where airflow may be turbulent and the responses of the controls may be non-linear, such as high-G turns or near-stall flight. Third, they often fail to capture the effect of combinations of controls together. Fourth, in reality sensors are imperfect, and these models often fail to capture the responses of the sensors to the real motion of the vehicle, for instance for aircraft they fail to capture the responses of the sensors such as airspeed indicators, attitude sensors etc. which may not report the true dynamics accurately.

Hence, whilst conventional digital models of vehicles may perform well in simulation, they suffer from the 'sim2real' gap, where the performance of a system fails to translate from simulation to reality. For instance, for aircraft, when flight controllers are trained and tested against FDMs, the flight controller may work well when tested against the FDM but then fail to control a real aircraft accurately.

Accordingly, it may be desirable to provided improved methods and systems for creating digital models of vehicles, such as digital twins for autonomous vehicles.

Certain aspects of the present disclosure and their embodiments may provide solutions to these or other challenges.

### Statement of the Invention

Aspects of the invention are defined by the accompanying claims. Preferred optional features are defined in the dependent claims.

According to an aspect there is provided a computer-implemented method of creating a digital twin model of a mobile asset, comprising: retrieving movement data of the mobile asset, the movement data comprising controller data and corresponding sensor data of the mobile asset measured during movement of the mobile asset; and training the digital twin model using the movement data; wherein the digital twin model comprises a model of movement behaviour of the mobile asset in different use conditions.

Advantageously, the digital twin created according to aspects and embodiments comprises a model of the movement behaviour of the mobile asset across different use conditions.

Digital twin models created in accordance with aspects and embodiments may advantageously capture the responses of the mobile asset to combinations of real control inputs through the controller data. In other words, the model of the movement behaviour as captured in the digital twin model may be described as mimicking the responses of the mobile asset to control actions. Further, the digital twin model created in accordance with aspects and embodiments may advantageously capture the real responses of the mobile asset throughout a wide range of its actual use conditions, for instance across its performance envelope, for instance including the extremities of the performance envelope. Further, the digital twin model created in accordance with aspects and embodiments may advantageously capture the responses of sensors, through the sensor data, to the real motion of the mobile asset.

Creation of the digital twin model in accordance with aspects and embodiments advantageously improves accuracy by intrinsically incorporating the accuracy of the sensors of the specific mobile asset being modelled into the digital twin model, by virtue of collecting real world movement data as measured through the sensor data.

Compared to the standard method of generating digital twin models of movement behaviour, aspects and embodiments as described herein may advantageously allow for faster and more efficient creation of digital twin models.

Compared to the standard method of generating digital twin models of movement behaviour, aspects and embodiments as described herein may advantageously allow for more accurate creation of digital twin models of mobile assets.

Compared to the standard method of generating digital twin models of movement behaviour, aspects and embodiments as described herein may advantageously provide for digital twin models that more accurately and completely model the movement behaviour of the mobile asset across the full range of its performance, such as its performance envelope for aircraft.

Compared to the standard method of generating digital twin models of movement behaviour, aspects and embodiments as described herein may advantageously allow for improved accuracy digital twin models through the capturing of real responses of the mobile asset to combinations of real control inputs.

Compared to the standard method of generating digital twin models of movement behaviour, aspects and embodiments as described herein may advantageously allow for improved accuracy digital twin models through the capturing of real responses of the sensors to the real motion of the mobile asset.

The controller data may comprise command outputs from a controller of the mobile asset to control at least one movement control system of the mobile asset. The sensor data may comprise sensor inputs from at least one sensor of the mobile asset indicative of at least one of pose, movement and/or environment of the mobile asset.

Accordingly, by capturing this mapping the digital twin model may advantageously allow forthe prediction of the sensor input at a future time, for instance based on a specific controller input.

Accordingly, the sensors and associated sensor data may be configured to provide inputs which relate both to effects the controller data is causing-such as pose and movement - but may additionally and advantageously also comprise input which relates to environmental contextual conditions in which the mobile asset is moving. Advantageously, this provides additional information on which the digital twin can be trained, thereby allowing the provision of a more accurate digital twin better able to simulate the movement behavior of the mobile asset across a wide range of different use conditions, for instance such as in heavy rain, or high wind etc.

The movement behaviour may comprise the relationship between changes in sensor inputs in response to changes in command outputs.

The movement data may be measured during at least one test journey of the mobile asset controlled by a human operator.

Hence, advantageously, according to aspects and embodiments the created digital twin model may be more accurate as the movement data has been collected during at least one test journey, wherein for instance during the test journeys the human operator has control over the movement performed, and hence a wide range of different movements can be explored thereby providing a broader range of data on which to train the digital twin model for instance performing movements across its entire performance envelope - and/or providing the ability to specifically tailor the training of the digital twin model to particular environments, for instance by specifically performing the test journeys in the location and/or conditions in which the mobile asset is intended to be used. Accordingly, a more accurate digital twin model may be created.

The movement data may be measured during a plurality of test conditions. The test conditions may comprise a plurality of movement conditions, each associated with a range of controller data, relating to conditions of movement the mobile asset is controlled to perform. Alternatively or additionally, the test conditions may comprise a plurality of environmental conditions, each associated with a range of environmental condition data, relating to conditions of an environment in which the movement is occurring.

Hence according to aspects and embodiments, advantageously the movement data for the mobile asset is collected across a range of test conditions, wherein the mobile asset is controlled to perform a range of conditions of movement - for instance across its entire or a substantially large amount of its performance envelope.

The digital twin model may comprise a machine learning model. Optionally, the machine learning model may be a neural network.

Hence in aspects and embodiments, an accurate digital twin model may be created in a time efficient manner. In particular, in the specific embodiments in which the digital twin model comprises a machine learning model, the power of machine learning models to both interpolate between known measured test data (i.e. the controller data and sensor data) and to extrapolate from them advantageously allows a highly accurate digital twin model to be created for the specific mobile asset across a wide range of different use conditions, for instance even close to and at the edge of the performance envelope for that mobile asset.

Training the digital twin model may comprise inputting, into the machine learning model, training data comprising the controller data; outputting, from the machine learning model, a predicted corresponding sensor data; and updating weights of the machine learning model based on minimising a loss function comparing the predicted corresponding sensor data to the corresponding sensor data for each controller data.

The digital twin model may comprise a vehicle dynamics model describing the dynamic behaviour of the mobile asset during movement.

Training the digital twin model may comprises using multivariate optimisation, comprising: determining predicted corresponding sensor data, comprising solving ordinary differential equations of the vehicle dynamics model using training data comprising the controller data; and updating coefficients of the ordinary differential equations based on minimising a loss function comparing the predicted corresponding sensor data to the corresponding sensor data for each controller data.

Hence in accordance with aspects and embodiments, advantageously, the digital twin model created in accordance with this specific embodiment is able to be scrutinized and understood, for instance as the coefficients determined can be stored and accessed, and hence the movement behaviour of the mobile asset may be more comprehensible. Accordingly, in aspects and embodiments, an accurate digital twin model may be created in a time efficient manner.

The training data may further comprise the environmental condition data.

Hence, in accordance with aspects and embodiments, the digital twin model created is advantageously more accurate than state of the art systems as it captures the movement behaviour of the mobile asset in response to real control inputs during real world movement of the mobile asset.

The mobile asset may be an autonomous vehicle configured to be controlled by a vehicle controller. Optionally, the method may further comprise training the vehicle controller using the created digital twin model.

The mobile asset may be an unmanned aerial vehicle (UAV) and the movement may be flight. Optionally, the vehicle controller is a flight controller.

According to an aspect there is provided a computer-readable medium having stored thereon computer executable instructions to cause a computer system to perform the method of creating a digital twin as described in any manner herein.

Accordingto an aspect there is provided a computer-implemented method of training a vehicle controller using a digital twin model created in accordance with any manner as described herein. Optionally, the vehicle controller may be a flight controller for an aircraft such as a UAV. According to an aspect there is provided a computer-readable medium having stored thereon computer executable instructions to cause a system to perform the method of training a vehicle controller using a digital twin model created in accordance with any manner as described herein.

Advantageously, this reduces the need to perform post-development movement tests of the mobile asset to ensure the vehicle controller accurately and appropriately controls the mobile asset.

According to an aspect there is provided a computer-implemented method of controlling a mobile asset using a vehicle controller trained using a digital twin created in accordance with any manner as described herein. For instance, in a specific embodiment, there is provided a method of controlling an aircraft, such as a UAV, using a flight controller trained using a digital twin as created in accordance with any manner as described herein. According to an aspect there is provided a computer-readable medium having stored thereon computer executable instructions to cause a system to perform the method of controlling a mobile asset using a vehicle controller trained using a digital twin created in accordance with any manner as described herein.

Accordingly, digital twin models in accordance with aspects and embodiments as described herein may advantageously allow vehicle controllers, such as flight controllers, to be trained and developed through for instance machine learning methods, thereby providing improved speed and accuracy of creating vehicle controllers as compared to state of the art methods. Subsequently, vehicle controllers, such as flight controllers, trained using digital twin models in accordance with aspects and embodiments as described herein may be used to (autonomously or otherwise) control the mobile asset to move in the real world across a range of use conditions. Further, the mobile asset may thereby be more accurately controlled by vehicle controllers developed using digital twin models as described herein.

Accordingto aspects and embodiments as described herein, there may advantageously be provided methods for generating digital twin models of mobile assets - such as for instance aircraft in the form of UAVs - by experimentally gathering data on the performance of the mobile asset as taken from movement in the real world. For instance, in the example of an aircraft such as a UAV, through at least one flight (i.e. controlled by a human pilot). Advantageously, such methods may allow for creating and training a digital twin model based on collecting data defining how inputs from the sensors actually respond to commands from the controllers in the real world, thereby ensuring that the digital twin model accurately captures this to allow it to respond in the same way.

It is noted that aspects and embodiments herein may be particularly advantageous for aircraft such as UAVs. In particular, UAVs are often developed for lower cost, fasterspeeds, and more degrees of freedom than other mobile assets, and hence they are subject to higher variance in their physical characteristics and performance and sensor accuracy. Hence in this domain providing specifically tailored digital twin models as created from actual real world use of the UAV is particularly advantageous to account for this variance and to more accurately represent the true movement behaviour of the mobile asset. Indeed, state of the art methods are disadvantageous as it is simply not possible to accurately theoretically model certain aspects of movement behaviour, such as for instance turbulence for an aircraft, let alone where you combine certain, for instance more extreme, movement behaviour such as the effect of turbulence near the stall speed. In aspects and embodiments as described herein, these movements can be tested in the realworld and realworld data can be collected forthe specific mobile asset in question in these conditions, hence providing considerable improvements in accuracy over conventional models.

Further, the context within which UAVs may be used may demand faster deployment times than other mobile assets, for instance where the launch of a UAV is urgent, and hence the ability to more quickly and efficiently create a digital twin model 7 is particularly advantageous. In these contexts simply operating the UAV and collecting movement data from real world use, and deriving a digital twin model using this data, is far faster than the conventional approaches.

Various aspects and embodiments of the invention are described without limitation below, with reference to the figures.

### Brief Description of the Drawings

There now follows, by way of example only, a detailed description of preferred embodiments of the present invention, with reference to the figures identified below.
**Figure 1** illustrates a method;
**Figure 2** illustrates a system;
**Figure 3** illustrates an apparatus.

### Detailed Description

In the following description, functionally similar parts carry the same reference numerals between figures. The following sets forth specific details, such as particular aspects, embodiments or examples for purposes of explanation and not limitation. It will be appreciated by one skilled in the art that other examples may be employed apart from these specific details. Aspects and embodiments of the invention are now described, without limitation and by way of example only, with reference to the accompanying drawings.

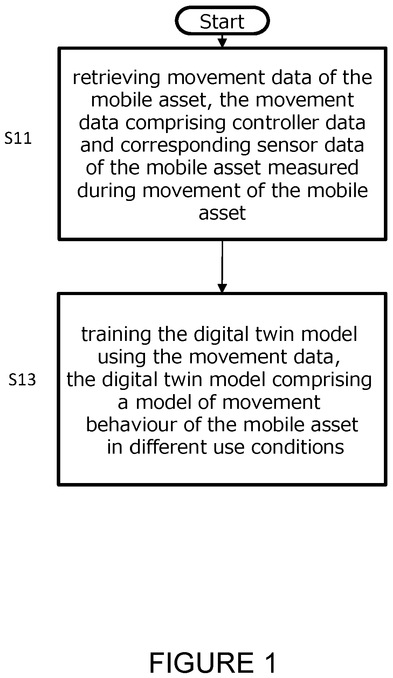

**Figure 1** illustrates a method according to an aspect. In particular, the method is a computer-implemented method of creating a digital twin model of a mobile asset. The digital twin model comprises a model of the movement behaviour of the mobile asset in different use conditions. The method may be performed using an information processing apparatus as described further below.

Step S11 comprises retrieving movement data of the mobile asset, the movement data comprising controller data and corresponding sensor data of the mobile asset, the controller data and corresponding sensor data measured during movement of the mobile asset.

Step S13 comprises training the digital twin model using the movement data.

Hence, in accordance with aspects and embodiments as disclosed herein, it may be possible to advantageously provide a digital twin of a mobile asset such as a vehicle, for instance an autonomous vehicle such as an UAV - also known as a drone - which is created based on data obtained from real world use of the mobile asset, rather than based on either theoretical knowledge and/or on artificial testing or simulation environments as is conventional in the state of the art, such as wind tunnels for aircraft. Accordingly, aspects and embodiments may provide a more accurate digital twin model of a mobile asset, and/or may provide a digital twin model of a mobile asset faster and more efficiently.

In specific embodiments, the digital twin model may be a digital representation of the mobile asset, and for instance is a digital representation of at least specific aspects of the mobile asset. In particular, as defined above, the digital twin model comprises at least a model of the movement behaviour of the mobile asset. In other words, the digital twin model may comprise a digital representation of the different manners of movement which the mobile asset exhibits in response to changes to the controls, for instance across different use conditions of the mobile asset. Hence advantageously, the digital twin created according to aspects and embodiments comprises a model of the behaviour of the mobile asset across different use conditions. As will be explained further below, use conditions may be a broad concept covering a wide range of conditions and manners in which the mobile asset can physically move and be used. Use conditions may include but be broader than test conditions, where in a specific embodiment test conditions may be the conditions in which the movement data is collected, for instance wherein the mobile asset is physically performing real movement in response to controller data of the mobile asset, and wherein sensor data is being collected during this movement.

Hence the digital twin model created in accordance with aspects and embodiments may advantageously capture the responses of the mobile asset to combinations of real control inputs through the controller data. In other words, the model of the movement behaviour as captured in the digital twin model may be described as mimicking the responses of the mobile asset to control actions. Further, the digital twin model created in accordance with aspects and embodiments may advantageously capture the real responses of the mobile asset throughout a wide range of its actual use conditions, for instance across its performance envelope, for instance including the extremities of the performance envelope. Further, the digital twin model created in accordance with aspects and embodiments may advantageously capture the responses of sensors, through the sensor data, to the real motion of the mobile asset.

In aspects and embodiments, the mobile asset comprises any physical asset capable of movement. For instance, the mobile asset may be a land, sea, air or space domain asset. For instance, the mobile asset may be a car or land vehicle of any form, may be a boat or sea vessel of any form, may be an aircraft or flying vessel of any form, or may be a rocket or space vehicle of any form. The type of movement will be particular to each type of mobile asset, and for instance for a land domain asset the movement will be terrestrial locomotion such as driving, and for instance for an aircraft the movement will be flight.

The mobile asset may be human controlled in situ in the mobile asset, or may be autonomous, which is also referred to as unmanned or uncrewed. It is noted that even when a mobile asset is autonomous and capable of automatically controlling and directing its own movement, this also covers different degrees of autonomy. For instance, autonomous vehicles include those that are remotely controlled by a human operator as well as those that are fully autonomous, and further includes hybrids of these two positions. For instance, an autonomous mobile asset may be remotely controlled in most contexts but have for instance a fully autonomous 'return to base' function. Similarly, an autonomous mobile asset may be human controlled but may also include an autopilot functionality.

In a specific embodiment, when the mobile asset is an autonomous mobile asset, the mobile asset is configured to be controlled by a vehicle controller, also referred to as a vehicle control system or automated control system. Vehicle controllers are control systems, comprising software connected to hardware of the vehicle in question, and which enable the vehicle to perform autonomous or semi-autonomous movement. Accordingly, vehicle controllers automate various vehicle functions to achieve the desired movement, for instance comprising managing and controlling aspects related to stability, navigation, and safety. For instance, in the specific example of an aircraft, the vehicle controller is a flight controller and may comprise at least the following functionality: Attitude and Heading Reference Systems (AHRS) which use sensors such as gyros and accelerometers to stabilize and control pitch, roll, and yaw; altitude control and position hold functionality allowing altitude and position maintenance for instance using GPS and barometric sensors; waypoint navigation and obstacle avoidance functionality, enabling autonomous navigation between preset waypoints while avoiding obstacles; and stabilization and hover control functionality, providing the ability to hover in place. Regardless of the specific implementation, vehicle controllers are systems configured to control and cause movement of the mobile asset. The vehicle controller may be physically located on the mobile asset, for instance typically housed within the main body of the mobile asset, however it may alternatively be remote or partially distributed. The vehicle controller may be a combination of hardware and software, for instance comprising a CPU and operating code/instructions stored in an associated memory etc.

In specific embodiment the mobile asset may be an aerial vehicle, and may for instance be an unmanned aerial vehicle (UAV) which is autonomously controlled by a flight controller.

In specific embodiments, the digital twin may be or comprise a vehicle dynamics model appropriate to the specific type of mobile asset. Accordingly, the digital twin, for instance a vehicle dynamics model, may be a computational model which mathematically describes the motion and movement of a mobile asset under the forces and moments it is subject to. For instance, for a land vehicle an associated vehicle dynamics model may describe the motion in terms of its interaction with the road surface, gravity, aerodynamic forces, and tire forces etc. For a sea domain vessel such as a boat the vehicle dynamics model may describe the motion in water, accounting for hydrodynamic forces, buoyancy, propulsion, and environmental factors such as wind and waves etc. Typically, vehicle dynamics models comprise a collection of ordinary differential equations (ODEs), where the specific solutions are related to the type of mobile asset under consideration.

In the specific example of an aircraft, such as a UAV, the vehicle dynamics model is a flight dynamics model. The flight dynamics model is a mathematical and computational representation used to describe and simulate the movement behaviour of the aircraft in response to forces and moments acting on it. The flight dynamics model mathematically represents the forces and moments in equations relating to the aerodynamic, gravitational, and propulsion forces, as well as control inputs. The flight dynamics model may include at least some of the following mathematical components: degrees of freedom, including translational motion being movement along the three dimensional axes - forward-back, up-down, left-right- and rotational motion rotating around the three axes- roll, pitch, yaw; coordinate systems such as a body-fixed frame and an inertial frame; equations of motion, comprising non-linear ODEs based on Newton's second law with reference to translational motion forces and rotational motion moments; aerodynamic forces and moments generated by airflow over the aircraft surfaces - such as wings, fuselage, and control surfaces such as rudder and elevator and ailerons - as defined by the aerodynamic forces of draft, lift and side force components and the aerodynamic moments of rolling, pitching and yawing moments; propulsion/thrust; gravity; kinematic equations relatingto velocity, angular velocity and position over time.

With reference to step S11, the movement data comprises controller data and corresponding sensor data. In particular, in specific embodiments the controller data is data relating to the signals which are being used to control the movement of the mobile asset (i.e. controller output), and the sensor data is data relating to information gathered by sensors on the mobile asset (i.e. sensor input). The controller data and the sensor data may be corresponding in terms of cause and effect, as the sensor data measures sensed information relating to the effects on the movement of the mobile asset caused by the controller data.

Hence, in accordance with aspects and embodiments, it may be considered that the digital twin model, comprising the movement behaviour of the mobile asset, is capturing the mapping between the movement of the mobile asset as perceived through the sensor input (the sensor data gathered by the sensors) and the controller output that caused it. Accordingly, by capturing this mapping the digital twin model may advantageously allow for the prediction of the sensor input at a future time, for instance based on a specific controller input. A mathematical expression of the mapping captured by the digital twin model may be represented as: sensor_inputₜ₊₁ = Function_{Digital-Twin-model}(sensor-inputₜ, controller_outputₜ), where '*t*' is time step and the digital twin model represents a function of the sensor input and controller output.

In accordance with the method of **Figure 1****,** it is noted that the retrieving of the movement data in step S11 may be at any time with respect to the measurement of the movement data during movement of the mobile asset. In other words, the movement data may be measured during movement of the mobile asset, and then subsequently stored in a computing system, wherein at a later point in time the movement data is then retrieved. Alternatively, the retrieval of the movement data in step S11 may be in real-time, simultaneously, contemporaneously or around the same time as the mobile asset 1 is moving and the movement data is being collected, in which case the retrieving may be or comprise actively collecting and/or measuring the movement data. Accordingly, steps S11 and S13 may be either substantially at the same time as, during, or after the movement of the mobile asset and the measuring of the movement data.

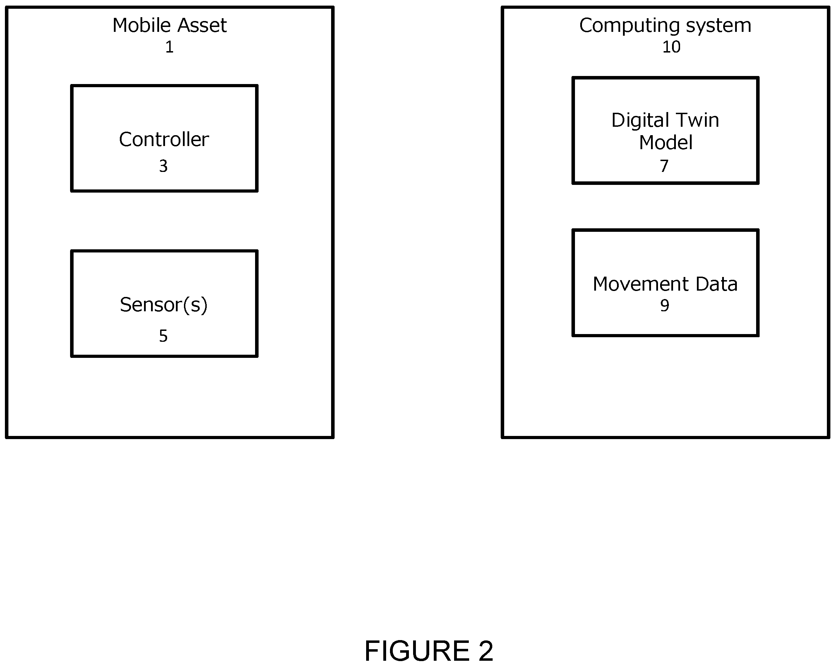

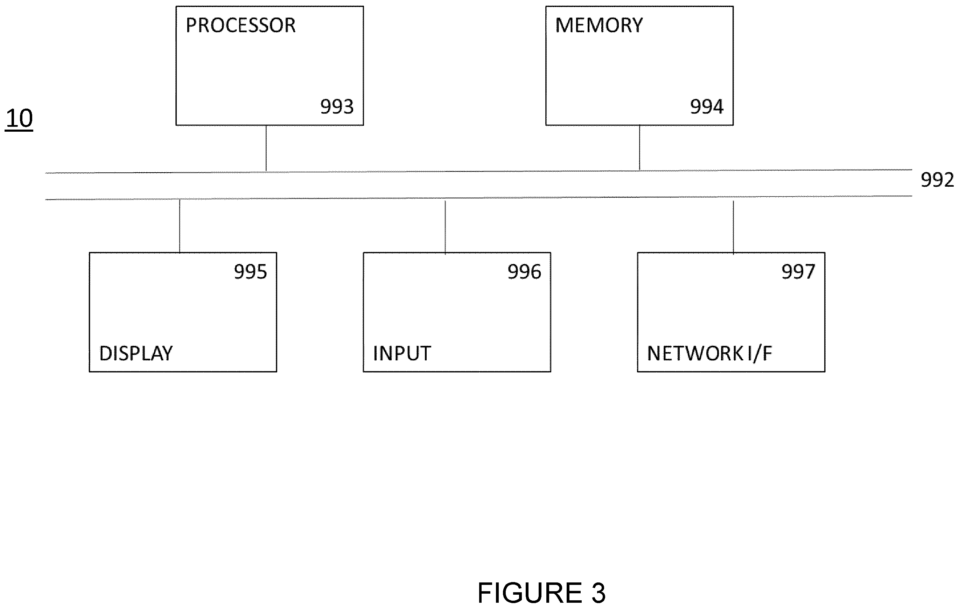

**Figure 2** illustrates a system in accordance with an aspect for use with and/or in the method of **Figure 1****.** The mobile asset 1 may be any mobile asset 1 as described herein, for instance may be an aircraft such as a UAV. The mobile asset 1 1 may include a controller 3 and at least one sensor 5, as described further below. The computing system 10 may store the digital twin model 7 and be able to perform various processing tasks, such as the training of the digital twin model 7 as described herein. The movement data 9, comprising the controller data and sensor data, may similarly be stored in the computing system 10 and be able to be transmitted, received and processed by the computing system 10. The computing system 10 may be in communication with the mobile asset 1, for instance by wireless communication, or may be configured to receive and transmit information to and from the mobile asset 1 by any communication means such as physical communication means. Further aspects of the computing system 10 are described with reference to **Figure 3****.** For instance, the digital twin model 7 and the movement data 10 may be stored in the memory 994.

In a specific embodiment of step S11, the controller data may comprise command outputs from a controller 3 of the mobile asset 1 to control at least one movement control system of the mobile asset 1. In particular, the controller 3 of the mobile asset 1 may be located on the mobile asset 1, and for instance may take the form of a CPU attached to and configured to control the various movement control systems of the mobile asset 1. For instance, in the specific example of an aircraft such as a UAV the movement control system may comprise at least one of the following: primary flight control surfaces such as ailerons, elevator and rudder; secondary flight control surfaces such as flaps, slats, spoilers and trim tabs; stabilizers and fins; canards; engines, thrust controllers and propellers; winglets. Accordingly, the command outputs are any digital control signals issued to any of the movement systems. For instance, in the specific example of an aircraft such as a UAV, an example command output may be a signal to cause the engine to increase output, for instance with the aim of moving the mobile asset 1 at a higher velocity. The controller 3 may be controlled remotely by a human operator, or may be controlled autonomously without human intervention.

In a specific embodiment of step S11, the sensor data may comprise sensor inputs from at least one sensor 5 of the mobile asset 1 indicative of at least one of pose, and/or movement and/or environment of the mobile asset 1. Accordingly, the sensor data represents the real-world effect and response of the mobile asset 1 to the controller data, such as command data, as measured and determined by the sensors 5 of the mobile asset 1. Hence the sensor data provides an insight into the movement behaviour of the mobile asset 1 in response to controller data. The pose of the mobile asset 1 relates to features defining the position and orientation in three-dimensional space, for instance such as at least one of the location, bearing, orientation (roll, pitch, yaw) and altitude of the mobile asset 1, and for instance other features providing relational definitions within a reference system, such as a coordinate system etc. The movement of the mobile asset 1 relates to features such as the airspeed, velocity, acceleration. Optionally, the sensor data may additionally include inputs from sensors 5 relating to the environment of the mobile asset 1, such as for instance weather, turbulence windspeed and wind direction.

Accordingly, the sensors 5 and associated sensor data may be configured to provide inputs which relate both to effects the controller data is causing-such as pose and movement - but may additionally and advantageously also comprise input which relates to environmental contextual conditions in which the mobile asset 1 is moving. Advantageously, this provides additional information on which the digital twin can be trained, thereby allowing the provision of a more accurate digital twin better able to simulate the movement behavior of the mobile asset 1 across a wide range of different use conditions, for instance such as in heavy rain, or high wind etc.

Accordingly, in a specific embodiment of step S11, the movement behaviour of the mobile asset 1 as captured in the digital twin model 7 may define the relationship between changes in sensor inputs in response to changes in command outputs.

In specific embodiments, it may be necessary to first add controllers 3 and sensors 5 to the mobile asset 1. For instance, in the specific example of UAVs, these typically do not have complex sensors 5 and controllers 3 by design, as some are intended to be low cost and easy to manufacture. In these instances, before performing the method of **Figure 1** it would first be necessary to add the required functionality to the UAV. Example sensors 5 may include for instance compasses, airspeed indicators, pitch and roll indicators, GPS/INS positioning systems, altitude meters etc.

In a specific embodiment of step S11, the movement data 9 may be collected during at least one test journey of the mobile asset 1, for instance in a plurality of test journeys, wherein the mobile asset 1 is controlled by a human operator. In a further specific embodiment, during these test journeys the mobile asset 1 may be controlled by a human operator either remotely or in situ in the mobile asset 1, regardless of whether the mobile asset 1 is autonomous in normal use conditions and/or also has autonomous capabilities. For instance, in the specific example of an aircraft such as a UAV, whilst this may in normal use conditions be either autonomous or remote controlled, during the at least one test journey it may be controlled by a remote operator to perform the movement of the mobile asset 1.

Alternatively, if the mobile asset 1 is entirely autonomous, a 'test journey' algorithm may be programmed into the on-board computing systems which when executed may cause the mobile asset 1 to perform at least one test journey.

Hence, advantageously, according to aspects and embodiments the created digital twin model 7 may be more accurate as the movement data 9 has been collected during at least one test journey, wherein during the test journeys the human operator has control over the movement performed, and hence a wide range of different movements can be explored thereby providing a broader range of data on which to train the digital twin model 7 - for instance performing movements across its entire performance envelope - and/or providing the ability to specifically tailor the training of the digital twin model 7 to particular environments, for instance by specifically performing the test journeys in the location and/or conditions in which the mobile asset 1 is intended to be used. Accordingly, a more accurate digital twin model 7 may be created.

In a specific embodiment of step S11, the movement data 9 is measured during a plurality of test conditions, the test conditions may comprise a plurality of movement conditions, each associated with a range of controller data, relating to conditions of movement the mobile asset 1 is controlled to perform. Alternatively or additionally, the test conditions may further comprise a plurality of environmental conditions, each associated with a range of environmental condition data, relatingto conditions of an environment in which the movement is occurring.

In these embodiments, advantageously the movement data 9 for the mobile asset 1 is collected across a range of test conditions, wherein the mobile asset 1 is controlled to perform a range of conditions of movement - for instance across its entire or a substantially large amount of its performance envelope. Movement conditions may relate to any variables associated with aspects of the movement of the mobile asset 1. For instance, in the specific example of an aircraft such as a UAV, movement conditions may include bearing, orientation (roll, pitch, yaw), altitude of the mobile asset 1, airspeed, velocity, acceleration, turning severity, incline, level, climb, turn, stall speed, corner speed, agility, turn characteristics, acceleration, deceleration, power excess characteristics etc. Hence for each movement condition a range of controller data may be explored. For instance, when the movement condition is speed, a range of controller data may be explored from high speeds (including top speed) to low speeds, where the controller data may thereby also relate to the mechanism(s) for causing said ranges of speed in the particular mobile asset 1. For instance, in the specific example of an aircraft such as a UAV, the range of controller data may be from high speed to low speed, and may also therefore be associated with controlling the propulsion mechanisms such as propellers to operate from low to high output. Hence in accordance with specific embodiments, the test conditions may include controlling the mobile asset 1 to perform across a range of movement conditions including for instance those associated with `normal' operation, for instance for an aircraft such as a UAV a normal flight mode, but also those associated with more extreme conditions at the edge of the performance envelope such as maneuvers including stall speed and corner speed etc. Combinations of all the above are also possible.

Accordingly, by collecting movement data 9 across a range and plurality of different movement conditions - for instance across the entire or substantially all of the performance envelope of the mobile asset 1 - accurate real-world data across a wide range of actual use conditions can be collected which may therefore allow the creation of a more accurate digital twin model 7.

As noted above, in specific embodiments the test conditions comprise a plurality of environmental conditions, each associated with a range of environmental condition data, relating to conditions of an environment in which the movement is occurring. In particular, the environmental condition data may be collected by the sensors 5, and be part of the sensor data, else may be collected and determined remotely. Regardless, the environment conditions may relate to any aspect of the environment in which the movement of the mobile asset 1 is being performed. For instance, the environmental condition data may relate to temperature, windspeed, weather, wind direction etc. Accordingly, a range of environment conditions may be chosen to perform the movement of the mobile asset 1. Further, specific environmental conditions may be selected such that the test conditions - such as the movement conditions - can be allowed to provide an even broader additional range of conditions. For instance, in the example of an aircraft such as a UAV, for instance high wind environmental conditions may be specifically chosen such that movement data 9 may be collected relating to movement conditions such as upwind, downwind, crosswind movement etc.

Accordingly, by collecting movement data 9 across a range and plurality of different environmental conditions, accurate real-world data across a wide range of actual use conditions can be collected which may therefore allow the creation of a more accurate digital twin model 7.

Hence, in accordance with aspects and embodiments, the digital twin model 7 created is advantageously more accurate than state of the art systems as it captures the movement behaviour of the mobile asset 1 in response to real control inputs during real world movement of the mobile asset 1.

Further, creation of the digital twin model 7 in accordance with any aspect or embodiment of step S11 as described herein advantageously improves accuracy by intrinsically incorporating the accuracy of the sensors 5 of the specific mobile asset 1 you are modelling into the digital twin model 7, by virtue of collecting realworld movement data 9 as measured through the sensor data. In particular, different mobile assets 1 have sensors 5 of different accuracies, and for instance even the same type of mobile asset 1 may have sensors 5 of a different accuracy from other mobile assets 1 of that same type. For instance, this is particularly true for lower cost mobile assets 1 such as for instance UAVs, where the accuracy in sensor 5 between each UAV may vary and may regardless be of a generally lower accuracy than sensors 5 fitted on more expensive aircraft such as fighter jets etc. By creating the digital twin model 7 in accordance with aspects and embodiments described herein, the noise and inaccuracies of the sensors 5 on the specific mobile asset 1 you are using are incorporated into the digital twin model 7 through said real-world sensor data, and for instance may therefore be considered to be specifically tailored to the mobile asset 1 being modelled. By contrast, in state of the art digital twin models the 'sim2real' problem occurs wherein the digital model creating from theoretical and/or test modelling such as wind tunnels has to assume accurate sensors 5, or at least cannot account for the specific and varying sensor 5 accuracy of the actual physical mobile asset 1 which the digital twin model 7 will be later used on after testing. In state of the art systems this varying sensor 5 accuracy is either not accounted for, else a dedicated sensor 5 calibration stage is required to ensure the accuracy of the sensors 5 on the specific mobile asset 1 are accurate. Accordingly aspects and embodiment as described herein provide for a digital twin model 7 of improved accuracy and in a more efficient and shorter timeframe.

Following step S11, step S13 comprises training the digital twin model 7 using the movement data 9. The digital twin model 7 comprises a model of movement behaviour of the mobile asset 1 in different use conditions. Accordingly, in otherwords, in specific embodiments the movement data 9 is used to train a digital twin model 7 that for instance mimics how the sensor 5 input, for instance as embodied in the sensor data, changes in response to control signals of the mobile asset 1, for instance as embodied in the controller data.

In a specific embodiment of step S13, the digital twin model 7 may comprise a machine learning model, for instance a neural network. Any appropriate type of machine learning model may be used. Accordingly, the machine learning model may be trained using supervised machine learning. In a specific embodiment, to model the movement behaviour of the mobile asset 1 in different use conditions, the machine learning model may implement a set of ordinary differential equations. Hence the machine learning model may in effect embody a vehicle dynamics model, such as a flight dynamics model. The machine learning model may not know in advance what form these ODEs take, and may be capable of deriving their form and solving the associated coefficients with respect to the specific mobile asset 1 in question. In a further specific embodiment the digital twin model 7 may comprise a neural network specifically configured to implement ordinary differential equations, for instance such as *'Neura Ordinary Different Equations'* (Ricky T. Q. Chen, Yulia Rubanova, Jesse Bettencourt, David Duvenaud, arXiv:1806.07366v5, https://doi.org/10.48550/arXiv.1806.07366)

In any embodiment in which the digital twin model 7 comprises a machine learning model, the training of the may comprise: inputting training data comprising the controller data into the machine learning model; outputting a predicted corresponding sensor data, from the machine learning model; and updating weights of the machine learning model based on minimising a loss function comparing the predicted corresponding sensor data to the corresponding sensor data for each controller data. Any suitable loss function may be used, for instance such as Mean Absolute Error (MAE), Hinge Loss, Cross-Entropy Loss, Huber Loss, Kullback-Leibler Divergence (KL Divergence), Binary Cross-Entropy Loss, Poisson Loss, Categorical Cross-Entropy Loss, Squared Hinge Loss, Mean Absolute Error (MAE).

Accordingly, in aspects and embodiments an accurate digital twin model 7 may be created in a time efficient manner. In particular, in the specific embodiments in which the digital twin model 7 comprises a machine learning model, the power of machine learning models to both interpolate between known measured test data (i.e. the controller data and sensor data) and to extrapolate from them advantageously allows a highly accurate digital twin model 7 to be created for the specific mobile asset 1 across a wide range of different use conditions, for instance even close to and at the edge of the performance envelope for that mobile asset 1.

In a specific embodiment of step S13, the digital twin model 7 may comprise a vehicle dynamics model describing the dynamic behaviour of the mobile asset 1 during movement. As previously described, typically, vehicle dynamics models comprise a collection of ordinary differential equations (ODEs), where the specific solutions are related to the type of mobile asset 1 under consideration. The vehicle dynamics model may be taken 'off the shelf' from a library etc. In the specific example of an aircraft such as a UAV, the vehicle dynamics model may be a flight dynamics model. In contrast to the specific embodiment concerning the machine learning model, vehicle dynamics model here is not embodied as a machine learning model and may instead be a set of mathematical equations, as previously described, stored in a computer. In these specific embodiments in which the digital twin comprises the vehicle dynamics model describing the dynamic behaviour of the mobile asset 1 during movement, training the digital twin model 7 may comprise using multivariate optimisation, comprising: determining predicted corresponding sensor data, comprising solving ordinary differential equations of the vehicle dynamics model using training data comprising the controller data; updating coefficients of the ordinary differential equations based on minimising a loss function comparing the predicted corresponding sensor data to the corresponding sensor data for each controller data. Accordingly, training the digital twin in these embodiments comprises solving the ODEs to determine the coefficients the specific mobile asset 1 in question, for instance using multi-vicariate optimisation, where this may be done computationally. The determined coefficients will then be mapped to the real-world movement data 9 collected for your specific mobile asset 1, and will thereby provide an accurate digital twin model 7 of your mobile asset 1. Advantageously, the digital twin model 7 created in accordance with this specific embodiment is able to be scrutinized and understood, for instance as the coefficients determined can be stored and accessed, and hence the movement behaviour of the mobile asset 1 may be more comprehensible. Accordingly, in aspects and embodiments, an accurate digital twin model 7 may be created in a time efficient manner.

In a specific embodiment of step S13 in accordance with those described above, the training data may further comprise the environmental condition data previously described, in addition to the controller data.

Regardless of the specific embodiments of step S13, one the digital twin model 7 has been trained, a validation stage may be performed on a subset of the collected movement data 9 which was not used in the training. For instance, a 'test set' or 'hold out' set of the movement data 9 which was not used in the training may be used to test and verify the accuracy of the digital twin model 7. Advantageously, this avoids overfitting and allows for improved accuracy of the digital twin model 7.

As previously described, in a specific embodiment the wherein the mobile asset 1 is an autonomous vehicle configured to be controlled by a vehicle controller. In these embodiments, once the digital twin model 7 has been trained in accordance with aspects and embodiments as previously described, the digital twin model 7 may be used to train the vehicle controller. Accordingly, the vehicle controller, such as a flight controller for aircraft such as UAVs, may be of improved accuracy and may be specifically tailored to the specific mobile asset 1 in question and how it actually performs in the real world. Hence according to an aspect there is provided a computer-implemented method of training a vehicle controller using the digital twin model as created in accordance with any manner as described herein. In a specific embodiment, the vehicle controller may be a flight controller and the mobile asset may be an aircraft such as a UAV.

Any appropriate method of training the vehicle controller using the digital twin model 7 may be used. For instance, the digital twin model 7 may be used to test the vehicle controller, such as a flight controller for aircraft such as UAVs, in a digital simulation environment. Advantageously, this reduces the need to perform post-development movement tests of the mobile asset 1 to ensure the vehicle controller accurately and appropriately controls the mobile asset 1. Alternatively the digital twin model 7 may be used to test the vehicle controller, such as a flight controller for aircraft such as UAVs, in a physical simulation environment such as a wind tunnel. The vehicle controller may be a machine learning based controller, else may be a traditional vehicle controller. The training of the vehicle controller may comprise creating realistic movement scenarios, for instance in the example of flight this may include takeoff, landing, hovering, maneuvering in turbulence, and emergency handling etc. The training approach may include for instance reinforcement learning, supervised learning, or classical optimization and adaptive control depending on the type of vehicle controller. The training process may comprise parameter tuning of the vehicle controller using the digital twin, for instance using simulated feedback loops. The training process may be completed by validating and transferring the vehicle controller to be integrated in the physical mobile asset 7 system for subsequent use in controlling the mobile asset 7.

Digital twin models 7 in accordance with aspects and embodiments as described herein may advantageously allow vehicle controllers, such as flight controllers, to be trained and developed through machine learning methods, thereby providing improved speed and accuracy of creating vehicle controllers as compared to state of the art methods. Subsequently, vehicle controllers, such as flight controllers, trained using digital twin models 7 in accordance with aspects and embodiments as described herein may be used to (autonomously or otherwise) control the mobile asset 1 to move in the real world across a range of use conditions. Further, the mobile asset 1 may thereby be more accurately controlled by vehicle controllers developed using digital twin models 7 as described herein. Accordingly, aspects and embodiments of the present application may also provide for an improved method of controlling a mobile asset using a vehicle controller trained using a digital twin created in accordance with any manner as described herein. For instance, in a specific embodiment, there is provided a method of controlling an aircraft, such as a UAV, using a flight controller trained using a digital twin as created in accordance with any manner as described herein.

Further still, once vehicle controllers have been developed based on training using digital twin models 7 as created in accordance with aspects and embodiments described herein, in the final use of the vehicle controller in controlling movement of a mobile asset 1 in the real world, if the vehicle controller is insufficiently accurate and/or for instance failure occurs, the data associated with the circumstances which cause this may be quickly and efficiently fed back into the training of the digital twin model 7 to allow for fast re-training of the vehicle controller. Accordingly, in specific embodiments, training the digital twin model 7 using the movement data 9 in accordance with step S13 further comprises the movement data 9 from movement of the mobile asset 1 collected after training of the vehicle controller.

Hence, in accordance with aspects and embodiments as described herein, a digital twin model 7 of a mobile asset 1 may be created which is of improved accuracy and which may be created in a fast and efficient manner.

In particular, the creation and training of the digital twin model 7 based data collected during real world actual use of the mobile asset 1 allows for far more accurate digital twin models 7 for modelling the movement behaviour of mobile assets 1 as compared to state of the art solutions. Accordingly, the aspects and embodiments as described herein may for instance better ensure the performance of the digital twin model 7 will better translate from simulation to reality - for instance when actually controlling the mobile asset 1- thereby accelerating development, and improving the performance of the mobile asset 1. This is particularly the case for use with autonomous vehicles such as UAVs which are controlled by vehicle controllers.

Compared to the standard method of generating digital twin models 7 of movement behaviour, aspects and embodiments as described herein may advantageously allow for faster and more efficient creation of digital twin models 7.

Compared to the standard method of generating digital twin models 7 of movement behaviour, aspects and embodiments as described herein may advantageously allow for more accurate creation of digital twin models 7 of mobile assets 1.

Compared to the standard method of generating digital twin models 7 of movement behaviour, aspects and embodiments as described herein may advantageously provide for digital twin models 7 that more accurately and completely model the movement behaviour of the mobile asset 1 across the full range of its performance, such as its performance envelope for aircraft.

Compared to the standard method of generating digital twin models 7 of movement behaviour, aspects and embodiments as described herein may advantageously allow for improved accuracy digital twin models 7 through the capturing of real responses of the mobile asset 1 to combinations of real control inputs.

Compared to the standard method of generating digital twin models 7 of movement behaviour, aspects and embodiments as described herein may advantageously allow for improved accuracy digital twin models 7 through the capturing of real responses of the sensors 5 to the real motion of the mobile asset 1.

It is noted that aspects and embodiments herein may be particularly advantageous for aircraft such as UAVs. In particular, UAVs are often developed for lower cost, faster speeds, and more degrees of freedom than other mobile assets 1, and hence they are subject to higher variance in their physical characteristics and performance and sensor accuracy. Hence in this domain providing specifically tailored digital twin models 7 as created from actual real world use of the UAV is particularly advantageous to account for this variance and to more accurately represent the true movement behaviour of the mobile asset 1. Indeed, state of the art methods are disadvantageous as it is simply not possible to accurately theoretically model certain aspects of movement behaviour, such as for instance turbulence for an aircraft, let alone where you combine certain, for instance more extreme, movement behaviour such as the effect of turbulence near the stall speed. In aspects and embodiments as described herein, these movements can be tested in the real world and real world data can be collected forthe specific mobile asset 1 in question in these conditions, hence providing considerable improvements in accuracy over conventional models.

Further, the context within which UAVs may be used may demand faster deployment times than other mobile assets 1, for instance where the launch of a UAV is urgent, and hence the ability to more quickly and efficiently create a digital twin model 7 is particularly advantageous. In these contexts simply operating the UAV and collecting movement data 9 from real world use, and deriving a digital twin model 7 using this data, is far faster than the conventional approaches.

### Example Computer System implementation

**Figure 3** is a block diagram of an information processing apparatus 10 or a computing device 10, such as a data storage server, which embodies the present invention, and which may be used to implement some or all of the operations of a method embodying the present invention, and perform some or all of the tasks of apparatus of an embodiment. The computing device 10 may be used to implement any of the method steps described above and/or any processes described above.

The computing device 10 comprises a processor 993 and memory 994. Optionally, the computing device also includes a network interface 997 for communication with other such computing devices. Optionally, the computing device also includes one or more input mechanisms such as keyboard and mouse 996, and a display unit such as one or more monitors 995. These elements may facilitate user interaction. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. Forexample, the computer-executable instructions may include those instructions for implementing a method disclosed herein, or any method steps disclosed herein, and/or any processes described above. Thus, the term "computer-readable storage medium" may also include any medium that is capable of storing, encoding or carrying a set of instructions for execution by the machine and that cause the machine to perform anyone or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the method steps described herein. The memory 994 stores data being read and written by the processor 993 and may store training data and/or network weights and/or patches and/or updated patches and/or embeddings and/or vectors and/or graphs and/or representations and/or difference amounts and/or equations and/or other data, described above, and/or programs for executing any of the method steps and/or processes described above. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 993 may be considered to comprise any of the modules described above. Any operations described as being implemented by a module may be implemented as a method by a computer and e.g. by the processor 993.

Optionally, the apparatus 10 includes a display unit 995 which may display a representation of data stored by the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc. may be included in the computing device.

Methods embodying the present invention may be carried out on a computing device/apparatus 10 such as that illustrated in **Figure 3****.** Such a computing device need not have every component illustrated in **Figure 3****,** and may be composed of a subset of those components. For example, the apparatus 10 may comprise the processor 993 and the memory 994 connected to the processor 993. Or the apparatus 10 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

For the purposes of the present disclosure, the term "machine learning model" encompasses within its scope the following concepts:
- machine Learning algorithms, comprising processes or instructions through which data may be used in a training process to generate a model artefact for performing a given task, or for representing a real world process or system;
- the model artefact that is created by such a training process, and which comprises the computational architecture that performs the task; and
- the process performed by the model artefact in order to complete the task.

References to "machine learning model", "model", model parameters", "model information", etc., may thus be understood as relating to anyone or more of the above concepts encompassed within the scope of "Machine learning model".
The above-described embodiments of the present invention may advantageously be used independently of any other of the embodiments or in any feasible combination with one or more others of the embodiments.

### Alternative Embodiments

The embodiments described above are illustrative of, rather than limiting to, the present invention. Alternative embodiments apparent on reading the above description may nevertheless fall within the scope of the invention.

## Claims

1. A computer-implemented method of creating a digital twin model of a mobile asset, comprising:
retrieving movement data of the mobile asset, the movement data comprising controller data and corresponding sensor data of the mobile asset measured during movement of the mobile asset; and
training the digital twin model using the movement data;
wherein the digital twin model comprises a model of movement behaviour of the mobile asset in different use conditions.

2. The computer-implemented method of claim 1, wherein:
the controller data comprises command outputs from a controller of the mobile asset to control at least one movement control system of the mobile asset; and
the sensor data comprises sensor inputs from at least one sensor of the mobile asset indicative of at least one of pose, movement and/or environment of the mobile asset.

3. The computer-implemented method of claim 2, wherein the movement behaviour comprises the relationship between changes in sensor inputs in response to changes in command outputs.

4. The computer-implemented method of any preceding claim, wherein the movement data is measured during at least one test journey of the mobile asset controlled by a human operator.

5. The computer-implemented method of any preceding claim, wherein the movement data is measured during a plurality of test conditions, the test conditions comprising:
a plurality of movement conditions, each associated with a range of controller data, relating to conditions of movement the mobile asset is controlled to perform; and/or
a plurality of environmental conditions, each associated with a range of environmental condition data, relating to conditions of an environment in which the movement is occurring.

6. The computer-implemented method of any preceding claim, wherein the digital twin model comprises a machine learning model, and optionally a neural network.

7. The computer-implemented method of claim 6, wherein training the digital twin model comprises:
inputting, into the machine learning model, training data comprising the controller data;
outputting, from the machine learning model, a predicted corresponding sensor data; and
updating weights of the machine learning model based on minimising a loss function comparing the predicted corresponding sensor data to the corresponding sensor data for each controller data.

8. The computer-implemented method of any of claims 1 to 5, wherein the digital twin model comprises a vehicle dynamics model describing the dynamic behaviour of the mobile asset during movement.

9. The computer-implemented method of claim 8, wherein training the digital twin model comprises using multivariate optimisation, comprising:
determining predicted corresponding sensor data, comprising solving ordinary differential equations of the vehicle dynamics model using training data comprising the controller data; and
updating coefficients of the ordinary differential equations based on minimising a loss function comparing the predicted corresponding sensor data to the corresponding sensor data for each controller data.

10. The computer-implemented method of any of claims 6 to 9 when dependent on claim 5, wherein the training data further comprises the environmental condition data.

11. The computer-implemented method of any preceding claim, wherein the mobile asset is an autonomous vehicle configured to be controlled by a vehicle controller.

12. The computer-implemented method of claim 11, further comprising training the vehicle controller using the digital twin model.

13. The computer-implemented method of any preceding claim, wherein the mobile asset is an unmanned aerial vehicle (UAV) and the movement is flight.

14. The computer-implemented method of claim 13 when dependent on claim 11, wherein the vehicle controller is a flight controller.

15. A computer-readable medium having stored thereon computer executable instructions to cause a computer system to perform the method of any preceding claim.
